(19) Europäisches Patentamt
European Patent Office
Office européen des brevets

(11) **EP 3 809 305 A1**

(12) **EUROPÄISCHE PATENTANMELDUNG**

(43) Veröffentlichungstag:
**21.04.2021 Patentblatt 2021/16**

(51) Int Cl.:
*G06F 30/23* (2020.01)    *G06F 111/10* (2020.01)

(21) Anmeldenummer: **19203264.7**

(22) Anmeldetag: **15.10.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder:
• **Rauh, Philipp**
  **90409 Nürnberg (DE)**
• **Bauer, Christian**
  **91728 Gnotzheim (DE)**

(54) **VERFAHREN UND VORRICHTUNG ZUM ERZEUGEN EINER DIGITALEN REPRÄSENTATION EINES TECHNISCHEN GEBILDES UND ENTSPRECHENDES COMPUTERPROGRAMMPRODUKT**

(57)    Die Erfindung betrifft ein Verfahren (1) und eine Vorrichtung (C1) zum Erzeugen einer digitalen Repräsentation (17) eines technischen Gebildes sowie ein entsprechendes Computerprogrammprodukt (1,C2). Bei dem Verfahren (1) werden auf digitalen Geometriedaten von Komponenten (2,18,19,20,21,22) basierende domänenspezifische Modelle bereitgestellt. Ausgehend davon wird eine Modellordnungsreduktion durchgeführt, wobei die domänenspezifischen Modelle in Modalkoordinaten überführt werden und damit ein spektrales Verhalten der Komponenten (2, 18,19,20,21,22) mittels einer jeweiligen Modalanalyse bestimmt wird. Darauf basierend werden entsprechende Zustandsraumdarstellungen als ordnungsreduzierte Spektralmodelle erzeugt. Für eine Simulation des technischen Gebildes insgesamt werden die Spektralmodelle miteinander zu der digitalen Repräsentation (17), die das Verhalten des technischen Gebildes domänenübergreifend beschreibt, gekoppelt.

FIG 4

EP 3 809 305 A1

**Beschreibung**

Die Erfindung betrifft ein Verfahren und eine Vorrichtung zum Erzeugen einer digitalen Repräsentation eines technischen Gebildes sowie ein entsprechendes Computerprogrammprodukt.

In der modernen Produktentwicklung kommen bereits heute vielfach computerunterstützte Methoden, wie beispielsweise eine genaue Bauteilmodellierung auf Basis finiter Elemente und weitere unter CAE (englisch: Computeraided Engineering; computerunterstütztes Entwickeln) zusammengefasste Methoden zum Einsatz. Darauf basierende Analysen können präzise Einblicke in Eigenschaften des jeweiligen modellierten Bauteils bieten und damit die Entwicklung beschleunigen. Nachteilig ist jedoch, dass entsprechende Daten oftmals nicht allgemein zugänglich und verständlich sind und beispielsweise FE-Spezialisten (FE: finite Elemente) vorbehalten sind. Zudem können mit heutzutage und auf absehbare Zeit praktikabel verfügbarer Berechnungshardware komplexe Systeme nicht in einer vertretbaren Zeit vollständig modelliert und simuliert werden, da hiermit zu viel Rechenaufwand und Komplexität verbunden ist.

Dementsprechend beschränkt man sich bisher oftmals auf eine separate Modellierung von Einzelkomponenten und/oder ersetzt komplexe Systeme oder Strukturen durch radikal vereinfachte Repräsentation, die nur sehr grob approximiert rudimentäre Aussagen und Ergebnisse liefern können. So kann für einen Elektromotor beispielsweise eine an sich komplexe Strukturdynamik eines Motorgehäuses reduziert werden auf zwei Massen und zwei Federn als vereinfachtes Ausgangsmodell für eine Rotordynamik oder ein Schwingungsverhalten eines Läufers kann als vereinfachte Grundlage für eine elektrische Berechnung grob approximiert werden, indem lediglich das Läufer-Massenträgheitsmoment betrachtet wird.

Mit keinem der bisherigen Ansätze können also auf praktikable Weise rechnergestützt detaillierte und verlässliche Aussagen und Erkenntnisse zu komplexen Strukturen oder Systemen, die aus mehreren miteinander interagierenden oder in Kontakt stehenden Komponenten aufgebaut sind, gewonnen werden. Genau dies wäre aber zukünftig für eine weiter verbesserte und digitalisierte Produktentwicklung von Interesse.

Aufgabe der vorliegenden Erfindung ist es, eine verbesserte Möglichkeit zur digitalen Handhabung eines technischen Gebildes anzugeben. Diese Aufgabe wird erfindungsgemäß durch die Gegenstände der unabhängigen Patentansprüche gelöst. Vorteilhafte Ausgestaltungen und Weiterbildungen der vorliegenden Erfindung sind in den abhängigen Patentansprüchen, in der Beschreibung und in den Figuren angegeben.

Ein erfindungsgemäßes Verfahren dient zum Erzeugen einer digitalen Repräsentation, also eines digitalen Modells oder digitalen Zwillings, eines vorgegebenen technischen Gebildes. Ein technisches Gebilde im Sinne der vorliegenden Erfindung kann beispielsweise ein Gerät, eine Maschine, ein Apparat, ein System, eine Anlage oder dergleichen sein, insbesondere aus mehreren Komponenten oder Bauteilen zusammengesetzt. Ein Beispiel für ein derartiges technisches Gebilde kann etwa ein Hochvolt-Elektromotor (HV-Motor) sein. Letztlich kann das erfindungsgemäße Verfahren aber für nahezu beliebige digital, also rechnergestützt darstellbare oder modellierbare Strukturen erfolgreich angewendet werden.

In einem Verfahrensschritt des erfindungsgemäßen Verfahrens werden auf digitalen 3D-Geometriedaten vorgegebener Komponenten des technischen Gebildes basierende domänenspezifische Modelle dieser Komponenten bereitgestellt oder erfasst. Die 3D-Geometriedaten geben einen Aufbau oder eine Struktur der jeweiligen Komponente an. Dazu können insbesondere kartesische Koordinaten aber ebenso etwa Zylinderkoordinaten, Kugelkoordinaten oder dergleichen verwendet werden. Diese Koordinaten, in denen die 3D-Geometriedaten beziehungsweise die domänenspezifischen Modelle bereitgestellt werden oder vorliegen, werden hier als ursprüngliche Koordinaten bezeichnet. Mit anderen Worten kann die Geometrie der jeweiligen Komponente also durch die 3D-Geometriedaten in den ursprünglichen, insbesondere kartesischen, Koordinaten beschrieben sein. Die 3D-Geometriedaten können beispielsweise in Form eines CAD-Datensatzes (CAD: Computer-aided Design), als FE-Modell oder dergleichen vorliegen. Im - die vorliegende Erfindung nicht hierauf einschränkenden - Beispiel eines Elektromotors können die Komponenten beispielsweise dessen Gehäuse, Rotor, Stator, Kühleinrichtung, elektrisches Aktivteil und dergleichen mehr sein.

Domänenspezifische Modelle sind hier Modelle, die jeweils zumindest primär Eigenschaften oder ein Verhalten der jeweiligen Komponente in jeweils einer physikalisch-technischen Domäne modellieren oder beschreiben. Derartige Domänen können beispielsweise die (klassische) Mechanik, die Elektrik oder Elektrodynamik, die Thermik oder Thermodynamik und dergleichen mehr sein, also jeweils einen Teilbereich oder ein Fachgebiet der Physik oder Technik betreffen oder umfassen. Entsprechende domänenspezifische Modelle können eine deutlich geringere Komplexität aufweisen als ein vollständiges Modell, das versucht, die jeweilige Komponente in allen Domänen oder Aspekten vollständig zu modellieren oder zu beschreiben. Damit sind die domänenspezifischen Modelle vorteilhaft mit entsprechend geringerem Aufwand erzeugbar und handhabbar.

Das Bereitstellen oder Erfassen der domänenspezifischen Modelle kann deren, beispielsweise computerunterstütztes oder teilautomatisiertes, Erzeugen und/oder deren Laden oder Abrufen aus einem bereitgestellten Datenspeicher oder einer Bibliothek entsprechender Modelle von Komponenten bedeuten oder umfassen.

In einem weiteren Verfahrensschritt des erfindungsgemäßen Verfahrens wird ausgehend von den domänenspezifischen Modellen eine Modellordnungsreduktion durchgeführt. Damit wird also eine Ordnung oder Komplexität und somit ein zum Durchrechnen oder digitalen Handhaben der Modelle notwendiger Berechnungsaufwand verringert. Dazu werden die domänenspezifischen Modelle zumindest teilweise von ihren ursprünglichen, insbesondere kartesischen, Koordinaten in Modalkoordinaten überführt oder transformiert. Diese Modalkoordinaten sind hier ein Satz von Minimalkoordinaten, wodurch vorteilhaft eine besonders effiziente und aufwandsarme Berechnung oder Simulation ermöglicht werden kann.

Mit diesen Modalkoordinaten wird ein spektrales Verhalten der Komponenten mittels einer jeweiligen Modalanalyse bestimmt. Durch die Modalanalyse erfolgt hier mit anderen Worten also eine numerische Charakterisierung einer Dynamik der Komponenten, wobei diese als schwingungsfähige Systeme aufgefasst werden und/oder den Komponenten eine Abklingzeit oder eine Zeitkonstante als Basis für die Modalanalyse zugeordnet wird. Die Dynamik beziehungsweise das spektrales Verhalten der Komponenten kann beispielsweise durch im Rahmen der jeweiligen Modalanalyse bestimmte modale Parameter, Eigenfrequenzen, Eigenformen oder Eigenschwingungsformen, eine modale Masse, gegebenenfalls eine modale Dämpfung und/oder dergleichen mehr charakterisiert oder beschrieben sein.

Darauf basierend werden dann für die Komponenten Zustandsraumdarstellungen (ZRD) als ordnungsreduzierte Spektralmodelle der Komponenten erzeugt. Mit anderen Worten werden die Komponenten beziehungsweise deren Verhalten oder Eigenschaften durch die Spektralmodelle in der jeweiligen Zustandsraumdarstellung beschrieben oder charakterisiert. Die Modellordnungsreduktion im Vergleich zu den ursprünglichen domänenspezifischen Modellen oder entsprechenden FE-Modellen der einzelnen Komponenten kann sich hier bereits dadurch ergeben, dass nur noch Moden, also jeweilige Schwingungszustände, der Komponenten insgesamt und nicht mehr individuelle Bewegungen oder Verhalten aller Teile oder Bereiche der jeweiligen Komponente für alle drei kartesischen Raumrichtungen berechnet oder modelliert werden. Die Spektralmodelle können also die Dynamik oder das Schwingungsverhalten der Komponenten auf einfachere oder kompaktere Weise beschreiben als die domänenspezifischen Modelle oder vollständige FE-Modelle der Komponenten.

In einem weiteren Verfahrensschritt des erfindungsgemäßen Verfahrens werden für eine Simulation des technischen Gebildes insgesamt die Spektralmodelle der Komponenten miteinander zu der digitalen Repräsentation, die das Verhalten des technischen Gebildes domänenübergreifend beschreibt, gekoppelt oder verbunden. Mit anderen Worten kann also die digitale Repräsentation des technischen Gebildes - analog zum Zusammenbau eines entsprechenden realen technischen Gebildes aus einzelnen Bauteilen - durch Koppeln der Spektralmodelle für die einzelnen Komponenten erzeugt werden. Da die Spektralmodelle auf domänenspezifischen Modellen, die insbesondere die Komponenten in unterschiedlichen Domänen beschreiben können, aufbauen, ergibt sich eine Charakterisierung, Beschreibung oder Modellierung des gesamten technischen Gebildes in entsprechend unterschiedlichen Domänen. Dabei kann jeweils eine Komponente durch ein Spektralmodell beschrieben werden oder es können Eigenschaften oder ein Verhalten einer Komponente in unterschiedlichen Domänen durch mehrere Spektralmodelle für diese Komponente beschrieben werden.

Durch das Koppeln der einzelnen Spektralmodelle miteinander können dabei vorteilhaft Interaktionen zwischen den Komponenten, insbesondere über unterschiedliche Domänen hinweg, modelliert oder simuliert werden und dementsprechend Erkenntnisse zum Verhalten oder zu Eigenschaften des gesamten technischen Gebildes gewonnen werden, die aus den bisher typischerweise individuell betrachteten domänenspezifischen oder FE-Modellen der einzelnen Komponenten nicht hervorgehen. Aufgrund der Modellordnungsreduktion bleibt ein Berechnungsaufwand für die derartige Modellierung und Simulation des gesamten technischen Gebildes vorteilhaft auch mit heutzutage verbreitet verfügbarer Berechnungshardware praktikabel handhabbar. Zudem bietet das erfindungsgemäße Verfahren weitere Möglichkeiten zur Beschleunigung und zur Reduzierung eines notwendigen Berechnungsaufwandes, die weiter unten näher erläutert werden. Die vorliegende Erfindung kann mit dem reduzierten notwendigen Berechnungsaufwand dennoch sehr viel detailliertere, genauere und verlässlichere Ergebnisse und Erkenntnisse zu dem Verhalten des gesamten technischen Gebildes liefern als bisher durch die eingangs beschriebene sehr grobe Approximation der Komponenten durch wenige fundamentale idealisierte Elemente gewonnen werden können. Damit ermöglicht es die vorliegende Erfindung beispielsweise, potentielle Probleme oder Schwachstellen im Design des technischen Gebildes rein digital und rechnergestützt mit verbesserter Genauigkeit und Zuverlässigkeit im Rahmen des Entwicklungs- oder Designprozesses zu erkennen und eine Auslegung der Komponenten besser an reale auftretende Belastungen anzupassen. Damit kann letztlich beispielsweise die Zuverlässigkeit realer technischer Gebilde verbessert und gleichzeitig gegebenenfalls Material eingespart werden.

Das erfindungsgemäße Verfahren kann mittels einer entsprechend eingerichteten Datenverarbeitungseinrichtung, beispielsweise der erfindungsgemäßen Vorrichtung zur Datenverarbeitung, insbesondere automatisch oder teilautomatisch, durchgeführt werden. Als derartige Datenverarbeitungseinrichtung kann beispielsweise ein herkömmlicher Computer, eine herkömmliche Workstation, ein Großrechner oder dergleichen verwendet werden. Die Datenverarbeitungseinrichtung kann also insbesondere einen Prozessor, einen Mikrochip, eine integrierte Schaltung, eine Hardwareschaltung oder dergleichen zum Ausführen eines das Verfahren kodierenden oder repräsentierenden Computerprogramms oder Programmcodes umfassen. Weiter kann die Datenverarbeitungseinrichtung insbesondere einen damit verbundenen flüchtigen und/oder nicht-flüchtigen Datenspeicher, eine oder mehrere Schnittstellen zum Empfangen und zum Ausgeben von Daten und/oder dergleichen mehr aufweisen. Die Datenverarbeitungseinrichtung kann eine oder mehrere Teileinrichtungen zum Ausführen der einzelnen Verfahrensschritte des erfindungsgemäßen Verfahrens aufweisen. Dies können beispielsweise eine Erfassungs- oder Bereitstellungseinrichtung zum Erfassen oder Bereitstellen der domänenspezifischen Modelle, eine Modellordnungsreduktionseinrichtung zum Durchführen der Modellordnungsreduktion sowie der im Zusammenhang damit beschriebenen Abläufe, und eine Kopplungseinrichtung zum Erzeugen der digitalen Repräsentation des technischen Gebildes durch Koppeln der Spektralmodelle miteinander sein. Ebenso kann eine Simulationseinrichtung zum Simulieren des technischen Gebildes auf Basis der derart erzeugten digitalen Repräsentation vorgesehen sein. Diese Teileinrichtungen können entsprechende Hardwareschaltungen oder Hardwaremodule aber ebenso entsprechende Programmteile oder Programmmodule des genannten Computerprogramms, also beispielsweise eines Betriebsprogramms für die Datenverarbeitungseinrichtung, sein oder umfassen.

In vorteilhafter Ausgestaltung der vorliegenden Erfindung wird in der jeweiligen Modalanalyse für die Komponenten jeweils eine modal entkoppelte Massenmatrix M und Steifigkeitsmatrix K bestimmt. Im Allgemeinen Fall kann hier ebenso eine jeweilige Dämpfungsmatrix D bestimmt werden. Ausgehend von der Bewegungsgleichung für die jeweiligen Komponenten erfolgt dann eine Neu-Arrangierung via Zustandsraumdarstellung, also im Formalismus der Zustandsraumdarstellung. Die Bewegung-Differenzialgleichung - kurz als Bewegungsgleichung bezeichnet - für eine Komponente mit einem Freiheitsgrad kann dabei repräsentiert sein als

$$\widetilde{M} \cdot \ddot{s} + \widetilde{D} \cdot \dot{s} + \widetilde{K} \cdot s = F$$

wobei s den Positionsvektor und F eine äußere Kraft angeben. Für den Spezialfall der Modalanalyse kann F = 0 gelten oder gesetzt werden. Die entsprechende Zustandsraumdarstellung kann gegeben sein als

$$\frac{d}{dt}x = A \cdot x + B \cdot u \quad und \quad y = C \cdot x + D \cdot u$$

wobei t die Zeit, x den Ortsvektor, u den Eingangsvektor, y den Ausgangsvektor, A die Systemmatrix, B die Eingangsmatrix, C die Ausgangsmatrix und D die Durchgangsmatrix angeben. Die Matrizen der Zustandsraumdarstellung sind dabei in normaler Darstellungsform gegeben als

$$A = \begin{bmatrix} 0 & I \\ -\widetilde{M}^{-1} \cdot \widetilde{K} & -\widetilde{M}^{-1} \cdot \widetilde{D} \end{bmatrix} , \quad B = \begin{bmatrix} 0 \\ \phi^T \end{bmatrix} und \quad C = \begin{bmatrix} \phi & 0 \end{bmatrix} .$$

Die Durchgangsmatrix D kann hier die Nullmatrix sein, also entfallen, wenn es sich bei dem technischen Gebilde oder der jeweiligen Komponente um ein mechanisches System handelt, da mechanische Systeme in Ort und Geschwindigkeit nicht sprungfähig sind. In vielen technischen Gebilden oder für viele Komponenten technischer Gebilde, beispielsweise Strukturbauteile eines Elektromotors, kann eine vernachlässigbare schwache Dämpfung angenommen werden, sodass auch die Dämpfungsmatrix D der Bewegungsgleichung entfallen kann. Durch Kombination und Neu-Arrangieren der Größen ergeben sich dann im Spezialfall vernachlässigbarer Dämpfung:

$$\dot{q} = \begin{bmatrix} 0 & I \\ -\widetilde{M}^{-1} \cdot \widetilde{K} & 0 \end{bmatrix} \cdot q + \begin{bmatrix} 0 \\ \phi^T \end{bmatrix} \cdot u = A \cdot q + B \cdot u$$
$$y = \begin{bmatrix} \phi & 0 \end{bmatrix} \cdot q = C \cdot q$$

und mit dem Zustandsvektor q und der Eigenformmatrix $\phi$. Die Modalanalyse kann hier also als ungedämpfte Modalanalyse durchgeführt werden, wodurch sich vorteilhaft eine vereinfachte Berechnung und ein entsprechend geringerer Aufwand ergeben.

Mit dem hier vorgestellten Ansatz lässt sich das erfindungsgemäße Verfahren, also die Digitalisierung und Modellierung beziehungsweise Simulation technischer Gebilde besonders effektiv und mit praktikabel handhabbaren Berechnungsaufwand realisieren.

In weiterer vorteilhafter Ausgestaltung der vorliegenden Erfindung wird die jeweilige Modalanalyse nur für einen vorgegebenen unteren Frequenzbereich und/oder nur für eine vorgegebene Anzahl der energiereichsten Moden durchgeführt. Beispielsweise kann die Modalanalyse auf einen Frequenzbereich zwischen 0 Hz und 2 kHz oder zwischen 0 Hz und 1 kHz oder zwischen 0 Hz und 500 Hz beschränkt werden. Zusätzlich oder alternativ kann die Modalanalyse auf relativ energiereiche Moden beschränkt werden. Dazu können die Moden beispielsweise nach ihrem Energiegehalt oder ihrem Beitrag zur Gesamtenergie der Schwingung oder Dynamik der jeweiligen Komponente sortiert werden. Von diesen können dann für weitere Berechnungen nur in die energiereichsten n Moden betrachtet oder verwendet werden, wobei n eine vorgegebene Zahl oder ein vorgegebener, beispielsweise prozentualer, Anteil sein kann. Ebenso kann beispielsweise anhand einer Art, einer Grundstruktur oder vorgegebenen Referenz- oder Vergleichswerten eine Annahme oder Abschätzung durchgeführt oder vorgegeben werden, in welchen Frequenzbereichen die energiereichsten Moden für die jeweilige Komponente voraussichtlich liegen und die Modalanalyse dann hierauf beschränkt werden. Durch die hier vorgeschlagene Beschränkung der Modalanalyse kann der benötigte Berechnungsaufwand weiter reduziert werden. Durch die spezifische hier vorgesehene Beschränkung können erfahrungsgemäß aber weiterhin besonders relevante Aussagen und Erkenntnisse zum Verhalten und zu Eigenschaften der Komponenten und des technischen Gebildes insgesamt gewonnen werden.

In weiterer vorteilhafter Ausgestaltung der vorliegenden Erfindung wird für die Modellordnungsreduktion die Überführung von den kartesischen Koordinaten in die Modalkoordinaten und/oder eine Rücküberführung aus den Modalkoordinaten in die kartesischen Koordinaten nach der Modalanalyse nur für eine vorgegebene Auswahl von diskreten Beobachtungspunkten, an denen bei der Simulation eine äußere Wirkung des technischen Gebildes insgesamt bestimmt wird, durchgeführt. Je nach Komplexität des technischen Gebildes können beispielsweise höchstens 1000 oder höchstens 100 Beobachtungspunkten vorgegeben sein oder verwendet werden. Diese Beobachtungspunkte können insbesondere Knotenpunkte, Verbindungs- oder Anschlusspunkte der Komponenten, Lager- oder Auflagepunkte oder dergleichen sein. Es hat sich gezeigt, dass durch eine derartige Beschränkung auf bestimmte Beobachtungspunkte, die für das Verhalten des technischen Gebildes und dessen Eigenschaften wesentlich sind, die heutzutage typischerweise benötigten oder nachgefragten Daten, beispielsweise zur Auslegung der Komponenten und/oder zur Belastung weiterer Bauteile in einer Umgebung oder in Kontakt mit dem technischen Gebilde, gewonnen werden können. Dabei ist im Vergleich zu einer vollständigen, beispielsweise FE-basierten Modellierung und Simulation des technischen Gebildes eine Reduzierung eines Berechnungsaufwandes oder einer zu handhabenden Datenmenge um mehrere Größenordnungen möglich. Eine Genauigkeit der Ergebnisse für das Verhalten des technischen Gebildes an den Beobachtungspunkten kann aufgrund der Struktur des hier vorgeschlagenen erfindungsgemäßen Modellierungsverfahrens dabei aber weiterhin im Bereich der auch mit einer vollständigen FE-Analyse erreichbaren Genauigkeit, beispielsweise bis auf Abweichungen von höchstens 5% oder höchstens 10%, liegen. Die Beschränkung auf die vorgegebenen Beobachtungspunkte kann also einen besonders effektiven und effizienten Beitrag zur Modellordnungsreduktion liefern.

An den vorgegebenen Beobachtungspunkten kann hier letztlich eine bidirektionale Verbindung zwischen der inneren, also modellinternen, modalen Beschreibung und der äußeren, kartesischen Beschreibung der Komponenten beziehungsweise des technischen Gebildes erfolgen. Diese Verbindung wird vorliegend mittels oder auf Basis der jeweiligen Eigenformen erzeugt. Diese sind ebenso wie die jeweiligen Eigenfrequenzen Teil der Modalanalyse und sind damit ohnehin verfügbar und erzeugen keinen weiteren oder zusätzlichen Berechnungsaufwand. Somit können nicht nur die bei dem vorliegenden erfindungsgemäßen Verfahren selbst handzuhabende Datenmenge, sondern auch beispielsweise daraus abgeleitete oder anhand daran gewonnene Daten, die anderen Anwendungen oder Programmen zur Verfügung gestellt werden, entsprechend reduziert werden. Die hier vorgeschlagene Ausgestaltung der vorliegenden Erfindung beruht auf der Erkenntnis, dass für viele Schritte etwa in der Entwicklung, Fertigung, Installation, Bewertung und Überprüfung von technischen Gebilden nur eine begrenzte Menge von Kerninformationen benötigt werden, nicht aber eine vollständige global Kenntnis über das detaillierte Verhalten des jeweiligen technischen Gebildes an sämtlichen Punkten oder in sämtlichen Bereichen. Zum Beispiel können bei einem Elektromotor insbesondere dessen Verhalten an einer Schnittstelle zu einer Lastmaschine, an einem Leistungsanschluss und an Auflagenpunkten oder einem Fundament von Bedeutung sein. Das erfindungsgemäße Verfahren ermöglicht es, auch für komplexe technische Gebilde, die aus mehreren miteinander gekoppelten Komponenten aufgebaut sind, detaillierte und verlässliche Angaben zu dem Verhalten an diesen oder entsprechenden Beobachtungspunkten mit im Vergleich zu bisherigen Ansätzen verbesserter Genauigkeit beziehungsweise praktikabel handhabbarem Aufwand zu erhalten.

In vorteilhafter Weiterbildung der vorliegenden Erfindung werden die Beobachtungspunkte in den 3D-Geometriedaten oder einem entsprechenden FE-Modell der Komponenten abhängig von einer Kategorie der jeweiligen Komponente automatisch festgelegt. Die Kategorien können vorgegeben sein, beispielsweise in einer Tabelle oder Datenbank oder als Parameter oder in Metadaten zu den jeweiligen Geometriedaten, dem jeweiligen FE-Modell oder der jeweiligen Komponente. Die Kategorien können eine Art oder einen Typ der Komponenten angeben. So kann eine Komponente beispielsweise als Gehäuse, als Kühlkörper, als Lager, als Achse oder Welle, als Rotor, als elektrisches Aktivteil, als Fundament und/oder dergleichen mehr kategorisiert sein oder werden. Beispielsweise kann für jede Kategorie vorgegeben sein, welcher Punkt oder welche Punkte als Beobachtungspunkte verwendet werden sollen. Dies können wie beschrieben beispielsweise Lager- oder Abstützpunkte, Knotenpunkte, Verbindungs- oder Anschlusspunkte aber ebenso Extrempunkte, wie beispielsweise ein Punkt oder Bereich minimalen Durchmessers oder minimaler Materialstärke, ein unterster Punkt, ein oberster Punkt oder ein Mittel- oder Schwerpunkt oder dergleichen sein. Diese Arten von Beobachtungspunkten können dann für die jeweilige Komponente in den Geometriedaten oder in dem FE-Modell automatisch bestimmt werden. Auf diese Weise lassen sich eine noch weitergehende Automatisierung des erfindungsgemäßen Verfahrens erreichen und damit ein Aufwand, der zum Gewinnen nützlicher Ergebnisse oder Erkenntnisse betrieben werden muss, weiter minimieren.

Ebenso können einige oder alle der Beobachtungspunkte manuell vorgegeben oder festgelegt oder angepasst werden. In jedem Fall können, sobald die Beobachtungspunkte - automatisch oder manuell - festgelegt sind, darauf aufbauend weitere Maßnahmen oder Schritte automatisiert ablaufen. So können dann, beispielsweise ebenfalls abhängig von der Kategorie der jeweiligen Komponente und/oder von der Anzahl und/oder Art der festgelegten Beobachtungspunkte, automatisch etwa eine Abtast- oder Sample-Rate oder Frequenz für die Modalanalyse oder die Simulation, eine Anzahl von zu bestimmenden Eigenformen oder Moden, ein zu betrachtender oder zu analysierender Frequenzbereich, ein zu verwendendes Koordinatensystem, eine Anzahl und Art zu berücksichtigender Freiheitsgrade und/oder dergleichen mehr festgelegt oder ausgewählt werden. Dazu können entsprechende Vorschriften und/oder Zuordnungstabellen vorgegeben sein.

In weiterer vorteilhafter Ausgestaltung der vorliegenden Erfindung werden beim Erzeugen der digitalen Repräsentation des technischen Gebildes zum Verbinden zumindest einiger der Spektralmodelle der Komponenten miteinander und/oder mit weiteren vorgegebenen Elementen idealisierte Kopplungsglieder verwendet. Derartige idealisierte Kopplungsglieder können beispielsweise ideale Federn, Dämpfer, Massen oder Massenschwinger oder dergleichen sein. Derartige idealisierte Kopplungsglieder können jeweils eine bestimmte Grundeigenschaft repräsentieren oder modellieren und zwar in mathematisch oder mechanisch idealisierter, also von realen Bauteilen abstrahierter, Art und Weise. Damit sind die idealisierten Kopplungsglieder und dementsprechend auch die Verbindungen der Komponenten beziehungsweise der weiteren Elemente besonders einfach modellierbar und berechenbar. Da jedoch die derart miteinander verbundenen Komponenten selbst mit größerer Genauigkeit modelliert werden, können die an den End- oder Verbindungspunkten der idealisierten Kopplungsglieder auftretenden Belastungen entsprechend genau das Verhalten eines entsprechenden realen technischen Gebildes wiedergeben, sodass sich trotz der Verwendung der idealisierten Kopplungsglieder letztendlich eine für praktische Zwecke ausreichende Genauigkeit ergeben kann.

Die genannten weiteren Elemente können beispielsweise eine Lagersteifigkeit, Reibungseffekte, insbesondere eine Luftreibung beweglicher Komponenten, und/oder dergleichen mehr repräsentieren. Die weiteren Elemente können also insbesondere Effekte oder Einflüsse repräsentieren, die nicht ohne Weiteres in Form von 3D-Geometriedaten oder als eigenständige FE-Modelle modelliert oder repräsentiert werden können. Insbesondere können durch die weiteren Elemente Nichtlinearitäten modelliert oder simuliert werden, die über die Ebene der Simulation des entsprechenden umfassenderen Systems aus Komponenten und weiteren Elementen vorhanden sein können. Derartige Nichtlinearitäten können beispielsweise in einem Gleitlager, im Luftspalt des HV-Motors und/oder an weiteren Stellen vorkommen. Die weiteren Elemente können ebenfalls idealisiert beziehungsweise abstrahiert sein oder durch individuelle Modelle, beispielsweise basierend auf einer kausalen oder physikalischen Modellierung, vorgegeben sein.

In weiterer vorteilhafter Ausgestaltung der vorliegenden Erfindung wird zumindest eines der Spektralmodelle der Komponenten auch mit wenigstens einer vorgegebenen digitalisierten Umgebungskomponente, die eine Umgebung des technischen Gebildes in einem geplanten realen Einsatz repräsentiert, verbunden. Dadurch wird eine digitale Repräsentation einer das technische Gebilde umfassenden Anlage für die Simulation erzeugt. Die Umgebungskomponente kann ihrerseits also beispielsweise ein technisches Gebilde sein oder repräsentieren, dass mit dem ursprünglichen technischen Gebilde zusammen die Anlage bildet oder Teil der Anlage ist. Beispiele für eine derartige Umgebungskomponente können etwa ein Fundament, auf dem das technische Gebilde abgestützt werden soll, ein Leistungsanschluss oder eine Leistungsversorgungsvorrichtung, worüber das technische Gebilde mit Leistung oder Energie versorgt werden soll, eine mittels des technischen Gebildes betriebene oder angetriebene Lastmaschine, eine Halterung für das technische Gebilde, eine Maschinenhalle, in der das technische Gebilde angeordnet werden soll, und/oder dergleichen mehr sein oder repräsentieren. Die Umgebungskomponente kann also eine jeweilige reale Einsatz- und/oder Arbeitsumgebung für das technische Gebilde repräsentieren oder abbilden. Dies ist besonders vorteilhaft, da das Verhalten des technischen Gebildes durch seine Umgebung beeinflusst werden kann und/oder auf diese Weise Erkenntnisse gewonnen werden können, gemäß derer eine Auslegung oder Ausgestaltung der Umgebung optimiert werden kann. Das Berücksichtigen der jeweiligen Umgebung ermöglicht vorteilhaft somit also eine individuelle Anpassung oder Bewertung für unterschiedliche Einsatzszenarien des technischen Gebildes. Dies war bisher nicht praktikabel möglich, da einerseits bei einer vollständigen FE-Analyse dafür ein nicht handhabbarer Aufwand entstehen würde und andererseits die eingangs genannte stark vereinfachende Repräsentation des technischen Gebildes allein durch wenige idealisierte Elemente keine ausreichend genauen Daten und Interaktionen liefert oder ermöglicht.

In vorteilhafter Weiterbildung der vorliegenden Erfindung wird die wenigstens eine Umgebungskomponente zunächst durch wenigstens ein idealisiertes Element repräsentiert. Dieses wird dann in einem iterativen Verbesserungsprozess der digitalen Repräsentation der Anlage durch ein finite-Elemente-Modell (FE-Modell) oder ein daraus abgeleitetes ordnungsreduziertes Spektralmodell der Umgebungskomponente ersetzt. Mit anderen Worten kann die digitale Repräsentation der Anlage also nach und nach angepasst und verbessert oder detaillierter ausgestaltet werden, beispielsweise sobald in einem entsprechenden Entwicklungs- oder Designprozess entsprechend detaillierte Modelle für die wenigstens eine Umgebungskomponente verfügbar werden. Es ist hier ein besonderer Vorteil der vorliegenden Erfindung, dass dies aufgrund des modularen Aufbaus der digitalen Repräsentation ohne Weiteres möglich ist. Dadurch, dass die Umgebungskomponente zunächst durch ein idealisiertes Element repräsentiert wird, kann ein initialer Berechnungsaufwand minimiert werden, so dass besonders schnell und frühzeitig bereits erste Erkenntnisse erlangt werden können. Somit lässt sich die Effizienz und Parallelität des Entwicklungs- und Designprozesses für das technische Gebilde beziehungsweise die Anlage verbessern. Ein idealisiertes Element meint hier eine auf idealisierten Annahmen basierende Beschreibung, die in der Realität auftretende komplexe Effekte vernachlässigt, wie dies beispielsweise aus den einfachsten Modellen und Theorien der klassischen Mechanik, Elektrodynamik und Thermodynamik bekannt ist.

Ein weiterer Aspekt der vorliegenden Erfindung ist ein Computerprogrammprodukt, das Befehle oder Steueranweisungen umfasst, die bei ihrer Ausführung durch einen Computer, insbesondere die erfindungsgemäße Vorrichtung zur Datenverarbeitung oder die im Zusammenhang mit dem erfindungsgemäßen Verfahren genannte Datenverarbeitungseinrichtung, diesen Computer dazu veranlasst, zumindest eine Variante des erfindungsgemäßen Verfahrens, insbesondere automatisch oder teilautomatisch, auszuführen. Das erfindungsgemäße Computerprogrammprodukt kann ein Computerprogramm sein. Das erfindungsgemäße Verfahren kann dementsprechend also ganz oder teilweise computerimplementiert oder computerimplementierbar sein, also durch ein solches Computerprogramm oder einen entsprechenden Programmcode kodiert oder repräsentiert werden. Ebenso kann das erfindungsgemäße Computerprogrammprodukt ein computerlesbarer Datenträger sein, auf dem ein entsprechendes Computerprogramm gespeichert ist.

Ein weiterer Aspekt der vorliegenden Erfindung ist die bereits genannte Vorrichtung zur Datenverarbeitung. Diese Vorrichtung weist Mittel zum, insbesondere automatischen oder teilautomatischen, Ausführen zumindest einer Variante des erfindungsgemäßen Verfahrens auf. Diese Mittel können insbesondere die im Zusammenhang mit der genannten Datenverarbeitungseinrichtung beschriebenen Mittel sein. Die erfindungsgemäße Vorrichtung kann zum Ausführen des Verfahrens beziehungsweise des entsprechenden Computerprogramms oder Programmcodes also insbesondere einen entsprechenden Prozessor, einen Datenspeicher und wenigstens eine Eingabe- und/oder Ausgabeschnittstelle aufweisen. Insbesondere kann die erfindungsgemäße Vorrichtung das erfindungsgemäße Computerprogrammprodukt umfassen. Da die erfindungsgemäße Vorrichtung also insbesondere zum Ausführen des erfindungsgemäßen Verfahrens eingerichtet sein kann und das erfindungsgemäße Verfahren also mittels der erfindungsgemäßen Vorrichtung ausgeführt werden kann, kann die erfindungsgemäße Vorrichtung entsprechend einige oder alle der im Zusammenhang mit dem erfindungsgemäßen Verfahren beschriebenen Eigenschaften und/oder Merkmale aufweisen.

Zu der Erfindung gehören auch Weiterbildungen der verschiedenen Aspekte der Erfindung, also des erfindungsgemäßen Verfahrens, des erfindungsgemäßen Computerprogrammprodukts und der erfindungsgemäßen Vorrichtung, die Merkmale aufweisen, wie sie nur im Zusammenhang mit einem oder einigen dieser Aspekte der Erfindung beschrieben sind. Um unnötige Redundanz zu vermeiden, sind die entsprechenden Weiterbildungen der vorliegenden Erfindung beziehungsweise von deren einzelnen Aspekten hier nicht noch einmal für alle diese Aspekte separat beschrieben.

Die Erfindung umfasst auch die Kombinationen der Merkmale der beschriebenen Ausführungsformen.

Im Folgenden sind Ausführungsbeispiele der Erfindung beschrieben. Hierzu zeigt:

FIG 1    eine schematische Darstellung einer Vorrichtung zum Ausführen eines Verfahrens zum Bereitstellen einer digitalen Repräsentation eines technischen Gebildes, wobei das Verfahren durch einen beispielhaften Ablaufplan repräsentiert ist;

FIG 2    eine schematische Darstellung zur Veranschaulichung einer ersten Beschreibung einer Komponente;

FIG 3    eine schematische Darstellung zur Veranschaulichung einer zweiten Beschreibung der Komponente; und

FIG 4    eine schematische Darstellung zur Veranschaulichung der digitalen Repräsentation.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

Es ist aus verschiedenen Gründen wünschenswert und vorteilhaft ein digitales Abbild oder eine digitale Repräsentation eines technischen Gebildes zur Verfügung zu haben, beispielsweise zu Unterstützung der Produktentwicklung und -überprüfung. Im Folgenden wird rein beispielhaft hierfür von einem elektrischen Hochvolt-Motor (HV-Motor) ausgegangen, der aus mehreren Komponenten und Bauteilen aufgebaut ist und somit ein komplexes technisches Gebilde darstellt. Für die Auslegung auf Seiten der Forschung und Entwicklung gibt es bislang lediglich zwei Alternativen zur digitalen, also rechnergestützten Betrachtung eines derartigen komplexen technischen Gebildes, bei dem mehrere Komponenten, die jeweils primär in unterschiedlichen physikalisch-technischen Domänen agieren, miteinander gekoppelt sind. Dies sind zum ersten eine aufwändige Multiphysik-Simulation und zum zweiten der Verzicht auf eine gekoppelte Betrachtung des gesamten technischen Gebildes. Ersteres ist aufgrund der dafür benötigten Ressourcen derzeit nicht praktikabel möglich, sodass in der Praxis üblicherweise auf eine korrekte Simulation des Gesamtsystems verzichtet wird. Gleiches gilt ebenso für eine präventive Analyse, beispielsweise eines gesamten Antriebsstrangs.

Weiter ist zu beachten, dass komplexe technische Gebilde typischerweise je nach Anforderungen oder Kundenwunsch in unterschiedlichen Konfigurationen bereitgestellt werden können. Dies bedeutet, dass selbst dann, wenn für Extremwerte, beispielsweise die schwerste, leichteste, längste, kürzeste, etc. Konfiguration oder Variante eine Analyse oder Simulation durchgeführt wird, anhand dieser oftmals keine belastbaren Aussagen oder eine optimierte Auslegung für kundenspezifische Varianten oder Konfigurationen vorgenommen werden können, die in der Mitte eines entsprechenden Parameterfeldes liegen und eventuell unerkannte ungünstige Kombinationen oder Interaktionen zwischen einzelnen Komponenten aufweisen können.

Anstelle einer vollständigen, also physikalisch zumindest im Wesentlichen korrekten Betrachtung des Gesamtsystems, also des gesamten technischen Gebildes, kann derzeit eine Simulation und entsprechende Auslegung für die einzelnen Komponenten des jeweiligen technischen Gebildes separat und domänenspezifisch durchgeführt werden. Damit erfolgt also eine Simulation oder rechnergestützte Untersuchung oder Analyse jeweils begrenzt auf einzelne Komponenten und einzelne Domänen und auch die Auslegung der einzelnen Komponenten und damit des technischen Gebildes insgesamt erfolgt nur in den einzelnen Domänen ohne eine gesamtsystemische Darstellung. Hinzu kommt, dass bei heutzutage etablierten Prozessen selbst entsprechende Simulationsdaten für die einzelnen Komponenten oftmals nur Spezialisten zur Verfügung stehen, beispielsweise innerhalb eines spezialisierten Programms zur finite-Elemente-Modellierung (FE-Modellierung) und damit anderen Abteilungen (beispielsweise Engineering oder Verkauf) oder jeweiligen Kunden beziehungsweise Nutzern oder Endverbrauchern nicht zur Verfügung stehen. Wie aus Nachfragen für ein digitalisiertes Abbild zur transienten Simulation vollständiger technischer Gebilde erkennbar ist, besteht jedoch ein entsprechender Bedarf .

Anstatt entsprechende genaue Simulationsdaten oder -modelle bereitzustellen, wurden diese zudem bisher typischerweise auf sehr grobe Aussagen reduziert. Beispielsweise wurde eine komplexe Strukturdynamik eines Motorgehäuses reduziert auf zwei Massen und zwei Federn, um beispielsweise eine Kombination mit einer Rotordynamik zu ermöglichen. Für eine elektrische Berechnung wurde beispielsweise ein Schwingungsverhalten eines Läufers sehr grob approximiert, indem nur das Läufer-Massenträgheitsmoment betrachtet wurde. Dabei werden die einzelnen Komponenten zudem nicht vollständig simuliert, sondern beispielsweise durch Ersatzschaltbilder oder einfache geometrische Grundformen oder abstrakte Massenpunkte repräsentiert.

Zur Lösung dieser Schwierigkeiten, Probleme und Unzulänglichkeiten soll hier ein Modellierungsverfahren vorgestellt werden, mittels dessen Kernaussagen aus Detailanalysen der einzelnen Domänen extrahiert und domänenübergreifend miteinander kombiniert werden können, um eine gemeinsame gesamtsystemische Betrachtung mit verbesserter Genauigkeit zu ermöglichen. Damit besteht vorteilhaft die Möglichkeit, eine spezifische Variante oder Konfiguration des jeweiligen technischen Gebildes domänenübergreifend zu simulieren. Dabei wird die jeweilige spezifische Variante oder Konfiguration digital aus einzelnen domänenspezifischen Modellen der Komponenten beziehungsweise Hauptkomponenten zusammengesetzt des jeweiligen technischen Gebildes.

Vorteilhaft kann dabei auch eine Kenntnis einer Umgebung des jeweiligen technischen Gebildes berücksichtigt werden, um letztlich das Verhalten der jeweiligen spezifischen Konfiguration des technischen Gebildes in einer spezifisch vorgesehenen Einsatz- oder Arbeitsumgebung zu simulieren.

Die einzelnen Komponenten werden domänenspezifisch, insbesondere auf Basis bereitgestellter jeweiliger digitaler 3D-Geometriedaten modelliert. Gegebenenfalls können dabei mehrere domänenspezifische Modelle unterschiedlicher Domänen für eine einzige Komponente erzeugt oder bereitgestellt werden, die dabei aber jeweils auf derselben 3D-Geometrie der Komponente basieren können. Dabei können jeweils design- oder spezifikationsgemäße Maße für die Geometrien oder entsprechende 3D-Geometriedaten verwendet werden, sodass die Komponenten hier also hinsichtlich ihrer Geometrie oder hinsichtlich ihres Aufbaus nicht vereinfacht oder abstrahiert werden, wodurch letztlich eine verbesserte Genauigkeit von resultierenden Ergebnissen erreicht werden kann. Umgebungskomponenten oder Umgebungselemente, also Elemente oder Bauteile der Umgebung oder solche, die die Umgebung repräsentieren, können in gleicher Art und Weise oder gegebenenfalls durch vereinfachte oder idealisierte Elemente bereitgestellt oder repräsentiert werden.

Mit der hier vorgestellten Technologie kann ein relevantes spektrales Verhalten des jeweiligen technischen Gebildes aus den einzelnen Domänen extrahiert werden, sodass effektiv die bisherigen kaum handhabbaren Berechnungsmodelle für eine vollständige Simulation, die beispielsweise 10 Millionen Gleichungen allein für die Strukturdynamik des Motorgehäuses umfassen können, in vergleichsweise wenige, beispielsweise 10 bis 100 oder bis 1000 Gleichungen gebündelt werden können. Durch die Art der Extraktion und eine Aufbereitung kann vorteilhaft sogar eine Weitergabe entsprechender Daten oder Modelle an Dritte, beispielsweise an externe Firmen oder Kunden, ermöglicht werden, ohne entwicklungs- oder fertigungsrelevantes Wissen offenzulegen, also unter Einhaltung von Geheimhaltungsanforderungen. Damit können die Dritten ein digitales Abbild des jeweiligen technischen Gebildes in der spezifischen angeforderten Konfiguration für transiente Berechnungen relevanter Kenngrößen erhalten, aus dem jedoch keine expliziten Detailinformationen über ein Innenleben oder einen inneren Aufbau des technischen Gebildes entnehmbar sind.

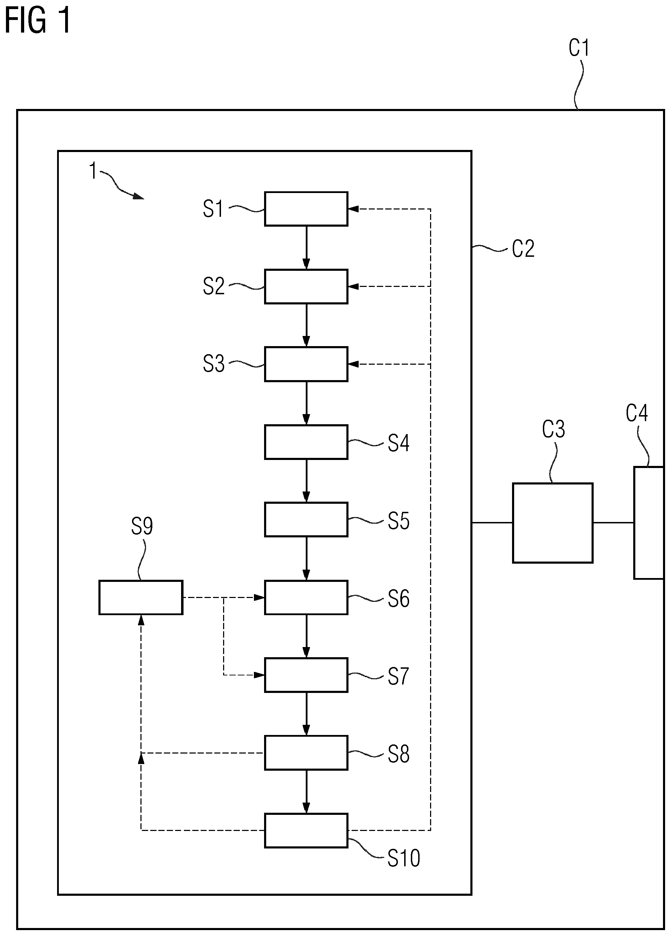

FIG 1 zeigt hierzu eine schematische Darstellung einer Datenverarbeitungseinrichtung C1, beispielsweise eines Computers, zum Ausführen eines Verfahrens zum Bereitstellen einer digitalen Repräsentation eines technischen Gebildes. Die Datenverarbeitungseinrichtung C1 weist hier einen Datenspeicher C2, einen damit verbundenen Prozessor C3 und eine mit diesem verbundene Schnittstelle C4 zum Empfangen und Ausgeben von Daten auf. Auf dem Datenspeicher C2 ist hier ein Computerprogramm gespeichert, das das Verfahren implementiert. Entsprechende Programmmodule beziehungsweise Verfahrensabläufe sind hier durch einen Ablaufplan 1 mit Verfahrensschritten S1 bis S10 repräsentiert. Nachfolgend soll das Verfahren anhand des Ablaufplans 1 unter Bezugnahme auf die übrigen Figuren näher erläutert werden.

Das Verfahren dient in erster Linie zur Erzeugung eines numerischen Zwillings des jeweiligen technischen Gebildes, hier also des HV-Motors, und stellt einen entsprechenden Workflow bereit. Im Verfahrensschritt S1 werden hier zunächst die digitalen 3D-Geometriedaten für die einzelnen Komponenten des HV-Motors aus einer Entwicklungsumgebung, hier aus einem PLM-System (PLM: Product Lifecycle Management), exportiert. Dabei wird ein neutrales, also herstellerunabhängiges, standardisiertes und nicht an eine spezifische Anwendung gebundenes Dateiformat, wie beispielsweise STEP (Standard for the Exchange of Product Model Data) verwendet. STEP ermöglicht dabei vorteilhaft besonders geringe Datenmengen und kann erfahrungsgemäß besonders gute Umwandlungsergebnisse liefern.

Im Verfahrensschritt S2 werden die so exportierten Geometriedaten, also ein entsprechender Datensatz, beispielsweise von 3D-CAD-Daten, in ein Programm zur FE-Modellierung oder FE-Simulation, beispielsweise "Ansys Mechanical", importiert. Darin wird der Datensatz CAE-gerecht (CAE: Computer-aided Engineering) aufbereitet. Dazu können beispielsweise Elemente, die nicht Teil einer Grundstruktur der jeweiligen Komponente und damit für das Verhalten der jeweiligen Komponente nicht oder weniger relevant sind, entfernt werden, um eine Datenmenge zu reduzieren. Dies können beispielsweise Elemente der Komponente selbst, wie beispielsweise Bohrungen zur Befestigung weiterer Elemente, Schmiermittelkanäle, Kabelhalter, etc. oder in dem importierten Datensatz enthaltene an der eigentlichen Komponente befestigte weitere Elemente sein. Diese CAE-gerechte Aufbereitung kann bereits als erster Teil einer Modellordnungsreduktion gesehen werden, durch die hier die handzuhabende Datenmenge und ein entsprechender Berechnungs- oder Simulationsaufwand soweit reduziert oder begrenzt wird, dass das hier beschriebene Verfahren mit herkömmlich verfügbarer Berechnungshardware, beispielsweise üblichen Arbeitsplatzrechnern oder Workstations, durchgeführt werden kann und keine Großrechner oder Supercomputer eingesetzt werden müssen.

In dem FE-Programm sind die Geometrien der Komponenten in ursprünglichen Koordinaten beschrieben. Dies können typischerweise kartesische Koordinaten sein, sodass es dann also drei Sätze von Gleichungssystemen für Höhe, Tiefe und Breite der jeweiligen Komponente gibt.

Im Verfahrensschritt S3 wird eine entsprechend gewonnene Analyse-Basis, letztlich also die Geometrie beziehungsweise der FE-Datensatz oder das FE-Modell, von den ursprünglichen, insbesondere kartesischen, Koordinaten in minimale Modalkoordinaten transformiert. Dies kann bevorzugt nur für eine vorgegebene diskrete Punktemenge durchgeführt werden, die einen relativ kleinen Teil aller Punkte des FE-Modells bildet. Dies stellt einen weiteren Teil der Modellordnungsreduktion dar, durch den die nachfolgenden Berechnungen oder Simulationen vereinfacht werden.

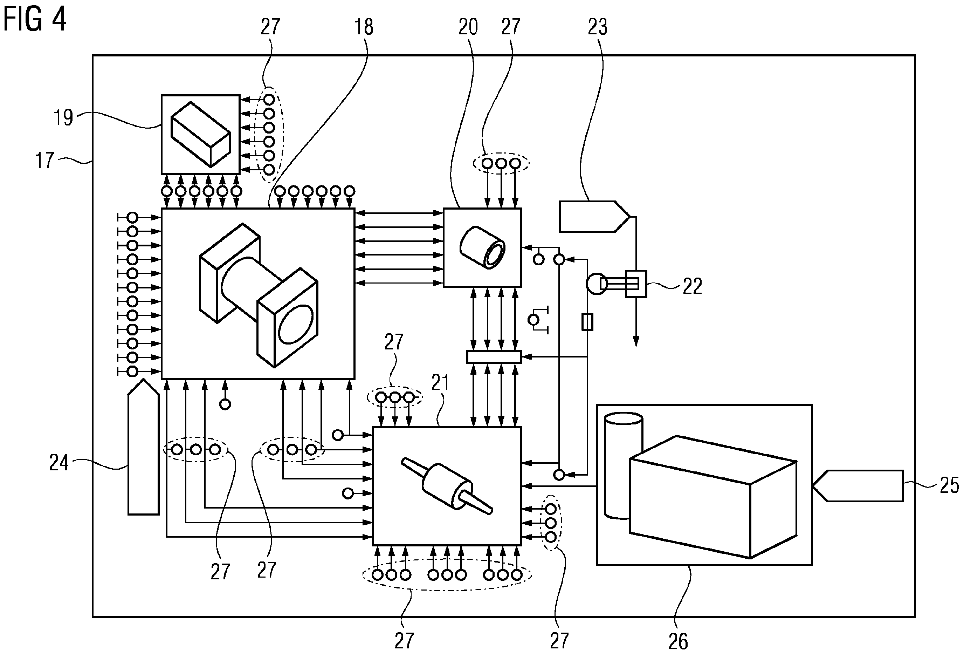

Im Verfahrensschritt S4 wird für die einzelnen Komponenten, also anhand der domänenspezifischen Modelle, eine jeweilige Modalanalyse zur Bestimmung des jeweiligen spektralen Verhaltens der Komponenten durchgeführt. Dabei wird die Modalanalyse auf die vorgegebene Punktemenge, also vorgegebene Beobachtungspunkte 27 (siehe FIG 4) beschränkt, an denen das Verhalten der jeweiligen Komponente in der Praxis besonders relevant ist. Diese Beobachtungspunkte können beispielsweise Knotenpunkte, Verbindungs- oder Anschlusspunkte zur Umgebung oder zu weiteren Komponenten, Lagerpunkte, Extrempunkte der Komponenten, Mittelpunkte oder anderweitig ausgezeichnete Punkte sein. Zudem können bevorzugt nur relativ tieffrequente aber relativ energiereiche Moden, beispielsweise bis zu einer Frequenz von 500Hz, berücksichtigt werden. Diese Begrenzungen auf wesentliche Daten an wesentlichen Punkten können eine Reduktion einer zu verarbeitenden Datenmenge um beispielsweise etwa fünf Größenordnungen, das heißt um etwa 99,999%, ermöglichen. Damit letztlich erhaltene Ergebnisse können in den ausgewählten Beobachtungspunkten 27 aber weiterhin etwa in der Genauigkeit einer vollständigen FE-Analyse liegen. Die beschriebene Beschränkung der Modalanalyse stellt einen signifikanten Teil der Modellordnungsreduktion dar.

Vorliegend wird hier eine ungedämpfte Modalanalyse durchgeführt, in der eine jeweilige Bewegungs-Differenzialgleichung in Grundform für die Komponenten enthalten ist oder verwendet wird. In der Modalanalyse werden für die Komponenten eine jeweilige modal entkoppelte Massenmatrix M und Steifigkeitsmatrix K berechnet. Diese werden im Verfahrensschritt S5 in eine Zustandsraumdarstellung (ZRD) überführt und neu arrangiert. Dies kann vereinfacht für einen Freiheitsgrad repräsentiert werden als:

$$\widetilde{M} \cdot \ddot{x} + \widetilde{K} \cdot x = F \;\rightarrow\; \frac{d}{dt}q = A \cdot q + B \cdot u \;\text{ und }\; y = C \cdot q$$

mit

$$A = \begin{bmatrix} 0 & I \\ -\tilde{M}^{-1} \cdot \tilde{K} & 0 \end{bmatrix} \, , \; B = \begin{bmatrix} 0 \\ \phi^T \end{bmatrix} \; \text{und} \; C = \begin{bmatrix} \phi & 0 \end{bmatrix}$$

mit dem Ortsvektor x, einer äußeren Kraft F, der Zeitvariablen t, dem Zustandsvektor q, der Systemmatrix A, der Eingangsmatrix B, der Ausgangsmatrix C, dem Ausgangsvektor y, der Diagonalmatrix $\tilde{M}^{-1} \cdot \tilde{K} = \text{diag}(\omega^2)$ der Eigenfrequenzen $\omega$ und der Eigenformmatrix $\phi$.

Eine bei Zustandsraumdarstellungen sonst mitunter verwendete Durchgangsmatrix kann hier die Nullmatrix sein und damit entfallen, da mechanische Systeme bei Ort und Geschwindigkeit nicht sprungfähig sind und die vorliegend betrachteten technischen Gebildes immer auch mechanische Systeme sein können. Ebenso wird hier beispielhaft von einer vernachlässigbar geringen Dämpfung ausgegangen, sodass also eine ansonsten auftretende Dämpfungsmatrix hier ebenfalls 0 ist.

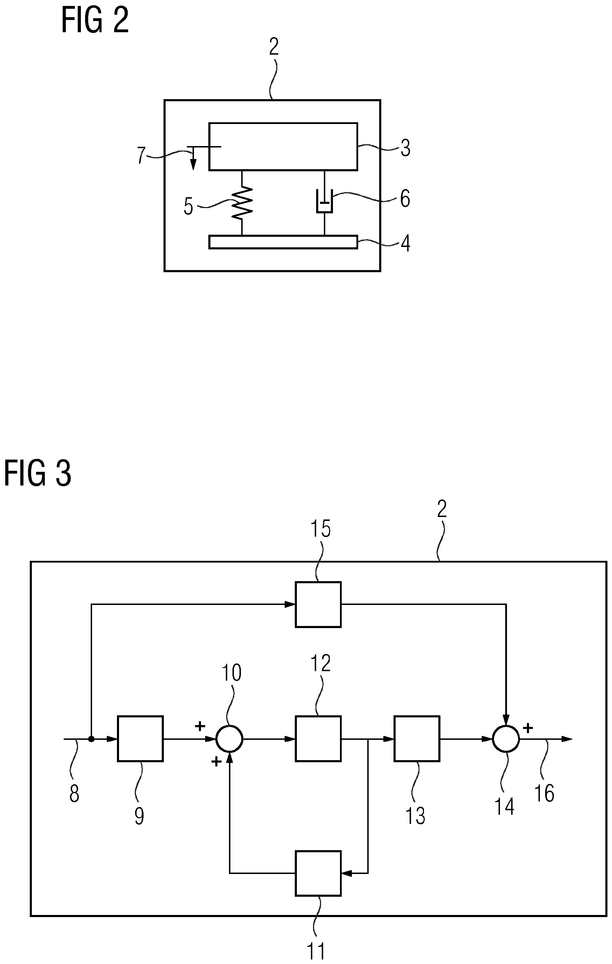

FIG 2 zeigt eine schematische Darstellung zur Veranschaulichung einer ersten Beschreibung einer Komponente 2, korrespondierend zur Bewegungs-Differenzialgleichung. Hier ist die Komponente 2 schematisch durch eine Masse 3 und eine Abstützung 4 sowie deren Kopplung mittels einer Feder 5 und eines Dämpfers repräsentiert. Das Verhalten der Komponente 2 wird durch einen hier ebenfalls schematisch repräsentierten Positionsvektor 7, entsprechend der Größe x, charakterisiert. In der Bewegungs-Differenzialgleichung für die Komponente 2 kann vorliegend eine Dämpfungsmatrix entfallen, da beispielsweise Strukturbauteile des HV-Motors ohnehin nur schwach gedämpft sind. Auf diese Weise können auch FE-Löser-Limitationen umgangen werden, aufgrund derer eine gedämpfte Modalanalyse derzeit nicht praktikabel machbar ist.

FIG 3 zeigt eine schematische Darstellung zur Veranschaulichung einer zweiten Beschreibung der Komponente 2, korrespondierend zur normalen Darstellungsform der Zustandsraumdarstellung. Hier wird ein zeitabhängiger Eingangsvektor 8, entsprechend der Größe u, mit einer Eingangsmatrix 9, entsprechend der Größe B, kombiniert. Ein daraus resultierendes Ergebnis wird in einem ersten Kombinationsglied 10 mit einer Systemmatrix 11, entsprechend der Größe A, addiert. Ein resultierendes Ergebnis wird mit einem Abklingglied 12 verknüpft, dass eine Zeitkonstante oder eine Proportionalität zu 1/Sekunde, also eine Frequenz, einführt. Ein resultierendes Ergebnis wird mit einer Ausgangsmatrix 13, entsprechend der Größe C, kombiniert. Ein entsprechendes Ergebnis wird in einem zweiten Kombinationsglied 14 mit der Durchgangsmatrix 15, entsprechend der Größe D, additiv kombiniert, sofern diese nicht entfällt. Letztendlich ergibt sich als Ergebnis ein zeitabhängiger Ausgangsvektor 16, entsprechend der Größe y.

Durch Kombination der Bewegung-Differenzialgleichung und der ZRD, entsprechend der Kombination der Beschreibungen gemäß FIG 2 und FIG 3, sowie die Neu-Arrangierung der Größen ergibt sich damit bei vernachlässigter Dämpfung:

$$\dot{q} = \begin{bmatrix} 0 & I \\ -\tilde{M}^{-1} \cdot \tilde{K} & 0 \end{bmatrix} \cdot q + \begin{bmatrix} 0 \\ \phi^T \end{bmatrix} \cdot u = A \cdot q + B \cdot u$$

und

$$y = \begin{bmatrix} \phi & 0 \end{bmatrix} \cdot q = C \cdot q .$$

Dies kann als mathematische Grundlage des hier beschriebenen Ansatzes aufgefasst werden.

Die Modalanalyse sowie die Modellordnungsreduktion werden für alle Komponenten des jeweiligen technischen Gebildes, hier also für alle Komponenten des HV-Motors, durchgeführt. Zur bidirektionalen Verbindung einer inneren modalen Beschreibung und einer äußeren kartesischen Beschreibung werden dabei jeweilige Eigenformen herangezogen. Diese sind ebenso wie jeweilige Eigenfrequenzen integraler Teil der Modalanalyse und bedeuten somit keinen weiteren Berechnungsaufwand. Die Umrechnung von kartesischen und Modalkoordinaten (Moden) erfolgt hier nur an den Beobachtungspunkten, sodass also nur dort letztlich eine äußere Wirkung der jeweiligen Komponente beziehungsweise des jeweiligen technischen Gebildes oder Systems berechnet wird. Die Berechnung erfolgt über die Eigenformmatrix $\phi$. Die Moden bilden k Zustände des jeweiligen Systems ab, die im Zustandsvektor q(t) zusammengefasst sind. Dies können, soweit vorhanden, Starrkörpermoden, Biegemoden, Torsionsmoden und/oder dergleichen mehr sein.

Eine Systemanregung, entsprechend dem Eingangsvektor u(t), wird hier in Anregungen der k Zustände q(t) zerlegt über

$$u_i(t) = \sum_{i,k} \theta_{i,k} \cdot q_k(t) \qquad ,$$

wobei der Index i für die jeweilige Anregung (Eingang, Ort und Freiheitsgrad) steht und $\theta_{i,k}$ das zugehörige Element der Eigenformmatrix $\phi$ als Gewichtungselement des jeweiligen Zustands angibt. Eine Antwort $y_j(t)$ jedes definierten Ausgangs j - für alle Ausgänge j zusammengefasst im Ausgangsvektor y - wird aus den Zuständen q(t) und den Eigenform-Gewichtungsfaktoren $\theta_{j,k}$ zusammengesetzt als:

$$y_j(t) = \sum_{j,k} \theta_{j,k} \cdot q_k(t) \qquad .$$

Auf diese Weise kann der Ausgang $y_j(t)$ für jeden definierten Beobachtungspunkt 27 und Freiheitsgrad berechnet werden. Die Zustandsraumdarstellung ist über die A-, B- und C-Matrizen vollständig beschrieben. Auf diese Weise kann insgesamt ein ordnungsreduziertes Modell erstellt werden.

Durch den hier beschriebenen Ansatz einschließlich des Wechsels von kartesischen Koordinaten zu Modalkoordinaten und die Begrenzung auf vorgegebene Beobachtungspunkte 27 wird eine signifikante Modellordnungsreduktion ermöglicht und so ein enormes Beschleunigungspotenzial für die Berechnung und Simulation erschlossen.

Die Ergebnisse des Verfahrensschritts S5, also etwa entsprechende Zustandsraummatrizen (englisch: state space matrices) werden im Verfahrensschritt S6, bevorzugt in einem neutralen Format, in eine Systemsimulation, also eine entsprechende Software oder ein entsprechendes Programm, beispielsweise "Ansys Twin Builder", importiert. Dort werden die ordnungsreduzierten Modelle der einzelnen Komponenten, also sogenannte Komponentenzwillinge, zu der digitalen Repräsentation des gesamten technischen Gebildes assembliert. Dabei werden die Komponentenzwillinge also miteinander verbunden, wobei gegebenenfalls weitere Elemente hinzugefügt werden können und der Verbund aus Komponenten in seine geplante Ziel-Applikation, also eine entsprechende Einsatz- oder Arbeitsumgebung, eingesetzt werden kann. Dazu können etwa Umgebungs-, Rand- und Anfangsbedingungen definiert und modelliert werden. Die weiteren Elemente, die gegebenenfalls hinzugefügt werden können, können beispielsweise Lagersteifigkeiten, eine Luftreibung und/oder dergleichen mehr repräsentieren. Letztlich können nahezu beliebige weitere Elemente eingefügt werden, solange diese mathematisch beschreibbar sind. Dies kann insbesondere für Lasten mit verschiedenen Kennlinien oder Kupplungen oder dergleichen gelten. Mit diesem Ansatz lassen sich auch weitere physikalische Effekte oder Domänen ergänzen. Letztendlich ergibt sich als Ergebnis hier die digitale Repräsentation, also ein Gesamtmodell oder spektrales Ebenbild oder Abbild des gesamten technischen Gebildes, gegebenenfalls einschließlich seiner Umgebung, was hier auch als numerischer Zwilling bezeichnet wird.

FIG 4 zeigt hierzu eine schematische Darstellung zur Veranschaulichung einer solchen digitalen Repräsentation in Form eines digitalen Zwillings 17 des HV-Motors einschließlich einiger Umgebungskomponenten, also eines numerischen Zwillings einer entsprechenden Gesamtanlage. Hauptkomponenten des HV-Motors sind hier ein Gehäuse 18, ein damit verbundenes Kühlelement 19, ein Stator 20, ein Rotor 21 sowie ein elektrisches Aktivteil 22. Der Stator 20 und der Rotor 21 sind dabei beispielsweise in dem Gehäuse 18 gelagert und somit mechanisch mit diesem zumindest indirekt gekoppelt. Weitere Komponenten, die mit dem HV-Motor verbunden sind, können etwa ein elektrischer Leistungssteller, hier repräsentiert durch ein elektrisches Versorgungsnetz beziehungsweise einen entsprechenden Netzanschluss 23, ein Fundament 24, auf dem das Gehäuse 18 aufliegen und montiert werden soll, eine hier nicht im Einzelnen dargestellte Kupplung sowie eine Last 25, die hier schematisch durch eine Lastmaschine 26 an den HV-Motor angebunden ist.

Hier dargestellte Verbindungen zwischen diesen Komponenten repräsentieren Interaktionen oder Wechselwirkungen oder Kopplungen zwischen den Komponenten. Diese Verbindungen können beispielsweise dadurch repräsentiert oder modelliert werden, dass an einer Komponente auftretende Leistungen, Belastungen oder Effekte als Eingangsgrößen zur Modellierung oder Simulation einer damit verbundenen anderen Komponente verwendet werden. Die Verbindungen können ebenso durch individuelle weitere Elemente repräsentiert werden. Dazu können beispielsweise ideale Übertragungsglieder, Federn, Dämpfer und/oder dergleichen mehr in den digitalen Zwilling 17 eingefügt werden. Damit lässt sich letztlich der HV-Motor in allen modellierten Domänen in seiner geplanten späteren Einsatzumgebung simulieren, insbesondere besonders zeiteffizient und mit verbesserter Genauigkeit im Vergleich zu herkömmlich tatsächlich angewendeten Verfahren. Dies wird hier durch eine Kombination von verschiedenen Maßnahmen und Methoden erreicht, die sich als besonders effektiv herausgestellt hat. Insbesondere die Modellierung der Umgebung, hier beispielsweise repräsentiert durch den Netzanschluss 23, das Fundament 24 und die Lastmaschine 26, ist eine neue Eigenschaft, die einen besonderen Vorteil des hier vorgeschlagenen digitalen Zwillings 17 beziehungsweise des hier vorgestellten Verfahrens gegenüber herkömmlichen Verfahren darstellt. Damit ist die Möglichkeit zur Modellierung der Umgebung sowie etwaiger weiterer Komponenten und jeweiliger Kopplungen mit ihrem jeweiligen spektralen Verhalten gegeben. Damit lässt sich das Verhalten des HV-Motors mit seiner Interaktion mit seiner Umgebung, also ein Gesamtverhalten des digitalen Zwillings 17, berechnen oder simulieren.

Beispielhaft gekennzeichnet sind hier einige Beobachtungspunkte 27, an denen das Verhalten beziehungsweise die äußere Wirkung des digitalen Zwillings 17 im Verfahrensschritt S8 tatsächliche simuliert wird. Das Verhalten des digitalen Zwillings 17 wird hier also beispielsweise nicht an jedem beliebigen Punkt des Gehäuses 18 berechnet, sondern beispielsweise nur an dessen Lagepunkten oder Verbindungen zu den übrigen Komponenten des digitalen Zwillings 17 und entsprechend für die übrigen Komponenten. Ein Anwender oder Nutzer des digitalen Zwillings 17 ist typischerweise hauptsächlich an einigen Kerninformationen bezüglich einer jeweiligen anwenderspezifischen Applikation interessiert. Diese Kerninformationen inkludieren definierte Schnittstellen und Ergebnisse an definierten Orten, beispielsweise eben den Beobachtungspunkten 27. Eine besonders relevante solche Schnittstelle stellt die Lastmaschine 26 dar. Hier können beispielsweise Werte für Drehzahl und Drehmoment gemäß realer Anforderungen oder Messungen bereitgestellt und anhand des digitalen Zwillings 17 berechnet oder simuliert werden. Eine weitere besonders relevante Schnittstelle ist ein Leistungsanschluss, hier beispielsweise der Netzanschluss 23 beziehungsweise das elektrische Aktivteil 22. Bei dem HV-Motor kann hier beispielsweise ein Dreiphasenwechselstrom aus Netzspeisung mit definierter Spannung und Frequenz (DOL, Direct Online) oder aus Umrichterspeisung mit geregelter Spannung und Frequenz für beliebige Drehzahlen (VSD, Variable Speed Drive) bereitgestellt beziehungsweise simuliert werden. Eine weitere Schnittstelle, also ein weiterer Beobachtungspunkt 27, der für die Auslegung im Rahmen der Produktentwicklung besonders relevant sein kann, ist das Fundament 24 beziehungsweise dessen Verbindung zu dem Gehäuse 18. Hierüber definiert sich im Zusammenspiel mit den Strukturbauteilen des HV-Motors beispielsweise ein Drehzahlstellbereich.

Diese und gegebenenfalls weitere Schnittstellen sind in dem digitalen Zwilling 17 in Form der Beobachtungspunkte 27 definiert. Weitere können bei Bedarf nachmodelliert werden. In gleicher Weise können zusätzlich oder als Teil der Beobachtungspunkte 27 Monitorpunkte definiert sein oder werden. Derartige Monitorpunkte können an beliebige Stellen des digitalen Zwillings 17 gesetzt werden, um dort Daten oder Informationen abzugreifen, also ein Verhalten des digitalen Zwillings 17 im Rahmen der Simulation nachzuverfolgen. Dies ist insbesondere auch an Stellen möglich, die an einem realen Gegenstück nicht ohne Weiteres zugänglich sind. Diese Technologie kann auch als virtueller Sensor oder soft Sensor bezeichnet werden, da es sich um eine virtuelle, digitale Beobachtung oder Analyse handelt. Insgesamt ist dieser Ansatz besonders vorteilhaft und bietet besonders großes Potenzial für Verbesserungen bisheriger Abläufe, weil beispielsweise Positionen von rotierenden und ortsfesten Teilen zueinander ohne komplexe physische Messverfahren mitverfolgt werden können.

Um die Simulation des digitalen Zwillings 17 iterativ zu verbessern, können im Verfahrensschritt S9 - soweit oder sobald verfügbar - detailliertere Modelle, beispielsweise FE-Modelle, weiterer Komponenten, beispielsweise für die Umgebung des HV-Motors oder für Kopplungen zwischen den Komponenten des HV-Motors und/oder für weitere physikalische Effekte in den digitalen Zwilling 17 integriert werden. Dabei können gegebenenfalls vorher verwendete, weniger detaillierte Modelle ersetzt werden. Dementsprechend können also einige oder alle der Verfahrensschritte S6 bis S10 mehrfach iterativ durchlaufen werden, wodurch vorteilhaft eine verbesserte Effizienz, Effektivität und Parallelität im Entwicklungsprozess erreicht werden kann.

Im - optionalen - Verfahrensschritt S10 können beispielsweise ein Ergebnis der Simulation mit einem real gebauten Gegenstück des digitalen Zwillings 17 verglichen werden, um eine Bewertung des digitalen Zwillings 17 beziehungsweise des hier beschriebenen Verfahrens zu ermöglichen und/oder um beispielsweise zu bestimmen, ob das reale Gegenstück, also eine entsprechende reale Anlage, innerhalb vorgegebener Spezifikationen betrieben wird. Dabei gewonnene Erkenntnisse können dann gegebenenfalls zur Verbesserung des Verfahrens beziehungsweise der Komponentenzwillinge, zur Verbesserung der Fertigung, zur Verbesserung einer Betriebsstrategie und/oder dergleichen mehr verwendet werden.

Letztlich erlaubt das hier vorgestellte Verfahren neben gewohnten Ergebnissen wie etwa Drehzahl-Drehmoment-Verläufen eine kohärente Modellierung der Physik, also eines vollständigeren Verhaltens des digitalen Zwillings 17 einschließlich Kopplungen zwischen Komponenten, wodurch sich beispielsweise die Möglichkeit ergibt, Lageschwingungen durch Unwucht oder beispielsweise Belastungen von Fundamentschrauben und/oder dergleichen mehr zu bestimmen, was mit bisherigen, komponentenspezifischen Einzelbetrachtungen oder Einzelmodellen nicht möglich war. Damit lassen sich beispielsweise Teile, wie etwa die Fundamentschrauben, besser an tatsächliche Belastungen angepasst auslegen und wertvolle Informationen, wie beispielsweise eine Krafteinleitung an verschiedenen Komponenten, eine Gesamtkraft, beispielsweise auf das Fundament 24, Schwingungsanregungen durch den HV-Motor für weiterführende bauingenieurliche Gebäudeanalysen und dergleichen mehr gewinnen.

Bei dem hier verwendeten Ansatz kann eine Kombination aus zwei verschiedenen Modellierungstypen, nämlich der kausalen Modellierung und der physikalischen Modellierung (konservative Modellierung), genutzt werden. Bei der kausalen Modellierung ist ein definiertes Eingangs-Ausgangs-Verhalten gegeben. Die physikalische Modellierung kann beispielsweise ein Knotenpotenzialverfahren (Kirchhoff-Regeln) nutzen, um eine bidirektionale Verbindung zwischen zwei Knotenpunkten und somit zwischen zwei Komponenten herzustellen. Ein Knoten oder Knotenpunkt kann in diesem Sinne eine Verbindung eines ordnungsreduzierten Modells einer Komponente zur Umgebung oder zu einer anderen Komponente beziehungsweise deren ordnungsreduziertem Modell sein. Insbesondere vereinfachte oder idealisierte weitere Elemente, wie beispielsweise Federn, Massen oder Dämpfungsglieder können ebenfalls über die physikalische Modellierung eingebunden werden. Damit kann vorteilhaft eine intuitive Anwendbarkeit des hier beschriebenen Verfahrens für eine große Bandbreite von Fachpersonal, beispielsweise für Ingenieure unterschiedlicher Disziplinen, ermöglicht werden.

Ein zentraler Prozess des hier vorgestellten Verfahrens kann in zwei Abschnitte geteilt werden. Dies sind zum einen die Erzeugung der Komponentenzwillinge im Rahmen einer FE-Analyse oder FE-Modellierung und zum anderen die simulatorische Nutzung des Gesamtzwillings, also des vollständigen digitalen Zwillings 17, in der Systemsimulation. Für eine praktische Anwendung können dafür derzeit beispielsweise die Programme "Ansys Mechanical" beziehungsweise "Ansys Twin Builder" verwendet werden. Damit lässt sich der Prozess beziehungsweise das Verfahren zumindest im Wesentlichen automatisieren, beispielsweise durch eine Ansteuerung via ACT (Application Compatibility Toolkit) beziehungsweise via IronPython (Implementierung der Programmiersprache Python), also durch Nutzung des Potenzials moderner Programmierung.

Im Rahmen der Prozessautomatisierung können zudem die Beobachtungspunkte 27 gegebenenfalls automatisch gesetzt oder erzeugt werden, beispielsweise in Abhängigkeit jeweiliger vorgegebener Kategorien der Komponenten. Dies kann vorteilhaft beispielsweise bereits anhand der Geometriedaten in dem FE-Programm erfolgen. Dabei können vorteilhaft ebenso automatisch entsprechende Koordinatensysteme, zu simulierende Freiheitsgrade, Rand- und Einspannbedingungen, angepasste Einstellungen für den FE-Löser und/oder dergleichen mehr definiert oder gesetzt und die Simulation oder Modellierung automatisch gestartet werden.

Gemäß einer vorgegebenen Spezifikation der jeweiligen technischen Gebilde können entsprechende Komponentenzwillinge gegebenenfalls aus einer bereitgestellten entsprechenden Modellbibliothek abgerufen werden, beispielsweise auf Basis jeweiliger maschinenlesbarer Fabrikate-Bezeichnungen (MLFB). Die jeweilige MLFB kann dabei die jeweilige Variante, Konfiguration oder Ausführung der Komponente oder des technischen Gebildes insgesamt angeben oder spezifizieren. Für den HV-Motor kann über die MLFB beispielsweise eine Achshöhe oder eine Längenziffer des Aktivteils 22 oder dergleichen vorgegeben sein. Es können dann alle benötigten Komponenten beziehungsweise deren bereitgestellte Modelle automatisch oder teilautomatisch in die jeweilige Simulationsumgebung importiert und mit ihren benachbarten Komponenten und/oder mit zwischengeschalteten weiteren Elementen, wie beispielsweise Federn, Dämpfern, Übertragungsgliedern, etc. verbunden werden. Auch beispielsweise die elektro-mechanische Energiewandlung des HV-Motors kann als entsprechender Komponentenzwilling eingefügt und automatisch oder teilautomatisch beispielsweise mit korrekten Koeffizienten eines entsprechenden T-Ersatzschaltbildes auf MLFB-Basis versehen werden.

Mit bisher verfügbaren Software-Werkzeugen lässt sich beispielsweise jeweils individuell die Rotordynamik des HV-Motors berechnen, ein zulässiger Drehzahlstellbereich bestimmen oder anhand der Strukturdynamik eine Systemantwort des Gehäuses 18 auf die Anregung beispielsweise einer benachbarten Dieselmaschine oder eines Erdbebens oder dergleichen ermitteln. Eine separate elektrische Simulation kann mit bisherigen Verfahren das Verhalten des HV-Motors bestimmen, wobei aber als mechanische Grundlage ein stark vereinfachtes Rotormodell in Form eines idealisierten Zwei-Massen-Schwingers anstelle der tatsächlichen spezifikationsgemäßen 3D-Geometriedaten des Rotors 21 verwendet wird.

Diese herkömmlichen Software-Werkzeuge versagen allerdings, wenn beispielsweise die Strukturdynamik rotordynamische Effekte beeinflusst, da eine entsprechende vollständige Analyse nicht praktikabel handhabbare Rechenzeit und Berechnungsressourcen beanspruchen würde. Daher werden bisher Interaktionen zwischen den Komponenten nicht oder zumindest nicht in realistischer Weise betrachtet. Derartige Interaktionen werden aber voraussichtlich in Zukunft einen größeren Stellenwert einnehmen, also von größerer Bedeutung sein, da beispielsweise gleichzeitige Anforderungen hinsichtlich Materialeinsparungen, Leistungserhöhungen, Steigerung von Effizienz und Ausnutzung für komplexe Systeme zu einer verstärkten Einbeziehung von Kopplungseffekten unter den Komponenten führen wird.

Mit dem hier vorgeschlagenen Verfahren kann die gesamte Physik auch eines komplexen technischen Gebildes domänenübergreifend kohärent in FE-Genauigkeit zumindest für die letztlich relevanten Beobachtungspunkte 27 modelliert werden mit einem aufgrund der Maßnahmen zur Modellordnungsreduktion begrenzten Berechnungsaufwand, der einen vollständigen Simulationslauf für den digitalen Zwilling 17 mit einem Zeithorizont von beispielsweise einigen Minuten anstelle von mehreren Tagen oder Wochen ermöglicht. Dabei können trotz der Modellordnungsreduktion im Vergleich zu bisherigen Verfahren neue Erkenntnisse gewonnen werden, da vorliegend nicht nur einzelne Komponenten und Domänen isoliert individuell betrachtet werden, sondern beispielsweise kombinierte Eigenformen mehrerer Komponenten und/oder aus mehreren Domänen miteinander kombiniert oder interagierend betrachtet, also simuliert werden können. Da die Domänen kohärent modelliert sind, lassen sich Ergebnisse aus Interaktionen über entsprechende Bereichsgrenzen hinweg erzeugen.

Insgesamt zeigen die hier beschriebenen Beispiele, wie eine digitale Handhabung eines komplexen technischen Gebildes durch eine angepasste Erzeugung eines numerischen Zwillings des technischen Gebildes verbessert werden kann.

**Patentansprüche**

1. Verfahren (1) zum Erzeugen einer digitalen Repräsentation (17) eines vorgegebenen technischen Gebildes, bei dem

   - auf digitalen 3D-Geometriedaten vorgegebener Komponenten (2,18,19,20,21,22) des technischen Gebildes basierende domänenspezifische Modelle dieser Komponenten (2,18,19,20, 21,22) bereitgestellt werden,
   - ausgehend von den domänenspezifischen Modellen eine Modellordnungsreduktion durchgeführt wird, wobei

     - die domänenspezifischen Modelle in Modalkoordinaten überführt werden,
     - damit ein spektrales Verhalten der Komponenten (2, 18, 19,20,21,22) mittels einer jeweiligen Modalanalyse bestimmt werden, und
     - darauf basierend für die Komponenten (2,18,19,20,21, 22) Zustandsraumdarstellungen als ordnungsreduzierte Spektralmodelle erzeugt werden, und

   - für eine Simulation des technischen Gebildes insgesamt die Spektralmodelle der Komponenten (2,18,19,20,21,22) miteinander zu der digitalen Repräsentation (17), die das Verhalten des technischen Gebildes domänenübergreifend beschreibt, gekoppelt werden.

2. Verfahren (1) nach Anspruch 1, **dadurch gekennzeichnet, dass** in der jeweiligen Modalanalyse für die Komponenten (2,18,19,20,21,22) jeweils eine modal entkoppelte Massenmatrix M und Steifigkeitsmatrix K bestimmt werden, die ausgehend von der Bewegungsgleichung für die jeweiligen Komponenten (2,18,19,20,21,22) via Zustandsraumdarstellung so arrangiert werden, dass sich für einen Freiheitsgrad die folgende Form ergibt:

$$\dot{q} = \begin{bmatrix} 0 & I \\ -\widetilde{M}^{-1} \cdot \widetilde{K} & -\widetilde{M}^{-1} \cdot \widetilde{D} \end{bmatrix} \cdot q + \begin{bmatrix} 0 \\ \phi^T \end{bmatrix} \cdot u \; ;$$
$$y = \begin{bmatrix} \phi & 0 \end{bmatrix} \cdot q$$

mit dem zeitabhängigen Zustandsvektor $q = \begin{pmatrix} s \\ \dot{s} \end{pmatrix}$ mit dem zeitabhängigen Positionsvektor s, der Diagonalmatrix $\widetilde{M}^{-1}\cdot\widetilde{K}$ der Eigenwerte, der Einheitsmatrix I, der Dämpfungsmatrix D, der Eigenformmatrix $\phi$, dem zeitabhängigen Eingangsvektor u und dem zeitabhängigen Ausgangsvektor y.

3. Verfahren (1) nach einem der vorhergehenden Ansprüche, **dadurch gekennzeichnet , dass** die jeweilige Modalanalyse nur für einen vorgegebenen unteren Frequenzbereich, insbesondere zwischen 0Hz und 2kHz, und/oder nur für eine vorgegebene Anzahl der energiereichsten Moden durchgeführt wird.

4. Verfahren (1) nach einem der vorhergehenden Ansprüche, **dadurch gekennzeichnet, dass** für die Modellordnungsreduktion die Überführung von den ursprünglichen Koordinaten der domänenspezifischen Modelle in die Modalkoordinaten und/oder eine Rücküberführung aus den Modalkoordinaten in andere Koordinaten, insbesondere in die ursprünglichen Koordinaten, nach der Modalanalyse nur für eine vorgegebene Auswahl von diskreten Beobachtungspunkten (27), insbesondere für höchstens 1000 Beobachtungspunkte (27), durchgeführt wird, an denen bei der Simulation eine äußere Wirkung des technischen Gebildes insgesamt bestimmt wird.

5. Verfahren (1) nach Anspruch 4, **dadurch gekennzeichnet, dass** die Beobachtungspunkte in den 3D-Geometriedaten der Komponenten (2,18,19,20,21,22) abhängig von einer vorgegebenen Kategorie der jeweiligen Komponente (2,18,19,20,21,22) automatisch festgelegt werden.

6. Verfahren (1) nach einem der vorhergehenden Ansprüche, **dadurch gekennzeichnet, dass** beim Erzeugen der digitalen Repräsentation (17) des technischen Gebildes zum Verbinden zumindest einiger der Spektralmodelle der Komponenten (2,18,19,20,21,22) miteinander und/oder mit vorgegebenen weiteren Elementen idealisierte Kopplungsglieder verwendet werden.

7. Verfahren (1) nach einem der vorhergehenden Ansprüche, **dadurch gekennzeichnet, dass** zumindest eines der Spektralmodelle der Komponenten (2,18,19,20, 21,22) auch mit wenigstens einer vorgegebenen digitalisierten Umgebungskomponente (23,24,25,26), die eine Umgebung des technischen Gebildes in einem geplanten realen Einsatz repräsentiert, verbunden und dadurch eine digitale Repräsentation (17) einer das technische Gebilde umfassenden Anlage für die Simulation erzeugt wird.

8. Verfahren (1) nach Anspruch 7, **dadurch gekennzeichnet, dass** die wenigstens eine Umgebungskomponente (23,24,25,26) zunächst durch wenigstens ein idealisiertes Element (3,4,5,6) repräsentiert wird, das in einem iterativen Verbesserungsprozess der digitalen Repräsentation (17) der Anlage durch ein finite-Elemente-Modell oder ein daraus abgeleitetes ordnungsreduziertes Spektralmodell der Umgebungskomponente (23,24,25,26) ersetzt wird.

9. Computerprogrammprodukt (1,C2), umfassend Befehle, die bei ihrer Ausführung durch einen Computer (C1) diesen dazu veranlassen, das Verfahren (1) nach einem der vorhergehenden Ansprüche, insbesondere automatisch, auszuführen.

10. Vorrichtung (C1) zur Datenverarbeitung, aufweisend Mittel (C2,C3,C4) zum, insbesondere automatischen, Ausführen des Verfahrens (1) nach einem der Ansprüche 1 bis 8.

FIG 1

FIG 2

FIG 3

FIG 4

EP 3 809 305 A1

Europäisches Patentamt
European Patent Office
Office européen des brevets

**EUROPÄISCHER RECHERCHENBERICHT**

Nummer der Anmeldung

EP 19 20 3264

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | TENG XU ET AL: "Vibration Control of a High-Speed Precision Servo Numerically Controlled Punching Press: Multidomain Simulation and Experiments", SHOCK AND VIBRATION, Bd. 2017, 1. Januar 2017 (2017-01-01), Seiten 1-17, XP055684453, NL ISSN: 1070-9622, DOI: 10.1155/2017/4593546 * Zusammenfassung; Abbildungen 5, 15-17 * * Absatz 2.2, Teil 3, Teil 4 * * das ganze Dokument * ----- | 1-10 | INV. G06F30/23 ADD. G06F111/10 |
| X | ADAM PRZEKOP ET AL: "Alternative modal basis selection procedures for reduced-order nonlinear random response simulation", JOURNAL OF SOUND AND VIBRATION, ELSEVIER, AMSTERDAM, NL, Bd. 331, Nr. 17, 28. März 2012 (2012-03-28), Seiten 4005-4024, XP028488418, ISSN: 0022-460X, DOI: 10.1016/J.JSV.2012.03.034 [gefunden am 2012-04-05] * Zusammenfassung * * Teil 2.1, 2.2, 2.3 * * das ganze Dokument * ----- | 1-10 | |
| X | CATAGAY BASDOGAN: "Real-time simulation of dynamically deformable finite element models using modal analysis and spectral Lanczos decomposition methods", PROCEEDINGS OF THE MEDICINE MEETS VIRTUAL REALITY (MMVR'2001) CONFERENCE, 24. Januar 2001 (2001-01-24), XP055684351, * Zusammenfassung * * sections 3, 3.1, 3.2 * * das ganze Dokument * ----- | 1-10 | |

**RECHERCHIERTE SACHGEBIETE (IPC)**

G06F

Der vorliegende Recherchenbericht wurde für alle Patentansprüche erstellt

| Recherchenort | Abschlußdatum der Recherche | Prüfer |
|---|---|---|
| München | 8. April 2020 | Dapp, Wolfgang |